(19) Europäisches Patentamt
European Patent Office
Office européen des brevets

(11) Veröffentlichungsnummer: **0 362 637 B1**

(12) **EUROPÄISCHE PATENTSCHRIFT**

(45) Veröffentlichungstag der Patentschrift: **02.02.94**

(51) Int. Cl.$^5$: **C09B 29/033**, C09B 29/36, D06P 1/18

(21) Anmeldenummer: **89117505.1**

(22) Anmeldetag: **22.09.89**

Die Akte enthält technische Angaben, die nach dem Eingang der Anmeldung eingereicht wurden und die nicht in dieser Patentschrift enthalten sind.

# (54) Thiophenazofarbstoffe mit einer Kupplungskomponente aus der Thiazolreihe.

(30) Priorität: **01.10.88 DE 3833442**

(43) Veröffentlichungstag der Anmeldung:
**11.04.90 Patentblatt 90/15**

(45) Bekanntmachung des Hinweises auf die Patenterteilung:
**02.02.94 Patentblatt 94/05**

(84) Benannte Vertragsstaaten:
**CH DE FR GB IT LI**

(56) Entgegenhaltungen:
**EP-A- 0 169 483** **EP-A- 0 201 896**
**EP-A- 0 214 445** **EP-A- 0 269 953**
**FR-A- 2 401 960** **GB-A- 2 163 768**

(73) Patentinhaber: **BASF Aktiengesellschaft**
**Carl-Bosch-Strasse 38**
**D-67063 Ludwigshafen(DE)**

(72) Erfinder: **Etzbach, Karl-Heinz, Dr.**
**Carl-Bosch-Ring 55**
**D-6710 Frankental(DE)**
Erfinder: **Hansen, Guenter, Dr.**
**Alwin-Mittasch-Platz 8**
**D-6700 Ludwigshafen(DE)**
Erfinder: **Lamm, Gunther, Dr.**
**Heinrich-Heine-Strasse 7**
**D-6733 Hassloch(DE)**
Erfinder: **Reichelt, Helmut, Dr.**
**Johann-Gottlieb-Fiechte-Strasse 56**
**D-6730 Neustadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 362 637 B1

**Beschreibung**

Die vorliegende Erfindung betrifft neue Thiophenazofarbstoffe der Formel I

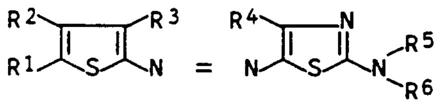

(I),

in der

$R^1$ Cyano, $C_1$-$C_4$-Alkoxycarbonyl, Phenylazo, Phenylsulfonyl, Formyl oder den Rest

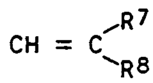

,

wobei $R^7$ und $R^8$ gleich oder verschieden sind und unabhängig voneinander jeweils für Cyano oder $C_1$-$C_4$-Alkoxycarbonyl stehen,

$R^2$ $C_1$-$C_4$-Alkyl, Phenyl, Halogen, $C_1$-$C_4$-Alkoxy, oder $C_1$-$C_4$-Alkoxycarbonyl, oder $R^1$ und $R^2$ zusammen den Rest $(CH_2)_3$-CO, der gegebenenfalls durch 1 oder 2 Methylgruppen substituiert und dessen Carbonylgruppe orthoständig zum Schwefelatom an den Thiophenring geknüpft ist,

$R^3$ Cyano oder $C_1$-$C_4$-Alkoxycarbonyl,

$R^4$ $C_1$-$C_8$-Alkyl, Cyclohexyl, Phenoxy-$C_1$-$C_4$-alkyl, gegebenenfalls substituiertes Phenyl, Thienyl, $C_1$-$C_4$-Alkylthienyl oder Halogenthienyl,

$R^5$ $C_1$-$C_4$-Alkyl, $C_3$-$C_7$-Alkyl, dessen Alkylkette durch 1 oder 2 Sauerstoffatome unterbrochen ist, oder $C_1$-$C_4$-Alkoxy und

$R^6$ Phenylethyl oder $C_3$-$C_{12}$-Alkyl, dessen Alkylkette durch 1 bis 4 Sauerstoffatome unterbrochen und gegebenenfalls durch Phenyl oder Phenoxy substituiert ist,

bedeuten, mit der Maßgabe, daß wenn $R^5$ und $R^6$ gleichzeitig für durch Sauerstoffatome unterbrochenes Alkyl stehen, der Rest $R^6$ mindestens 2 Kohlenstoffatome mehr aufweist als der Rest $R^5$ und wobei mindestens einer der Reste $R^5$ und $R^6$ für eine durch Sauerstoff unterbrochene Alkylkette steht, sowie die Verwendung dieser Farbstoffe zum Färben von textilen Fasern.

Aus der EP-A 269 953 sind bereits Azofarbstoffe bekannt, deren Diazokomponente sich von einem Aminothiophen und deren Kupplungskomponente sich von Thiazolderivaten ableitet. Es hat sich jedoch gezeigt, daß die dort genannten Verbindungen Schwächen in ihren anwendungstechnischen Eigenschaften aufweisen.

Auch die FR-A- 2 401 960, EP-A- 169 483, EP 201 896 sowie die GB-A-2 163 768 beschreiben Azofarbstoffe mit einer Diazokomponente aus der Aminothiophen- und einer Kupplungskomponente aus der Thiazolreihe.

Schließlich werden in der EP-A- 214 445 Azofarbstoffe mit einer Diazokomponente aus der Aminothiophen- und einer Kupplungskomponente aus der Diaminopyridinreihe beschrieben.

Aufgabe der vorliegenden Erfindung war es deshalb, neue Azofarbstoffe mit einer Diazokomponente aus der Thiophenreihe und einer Kupplungskomponente aus Thiazolreihe bereitzustellen, die über ein vorteilhaftes anwendungstechnisches Eigenschaftsprofil verfügen.

Demgemäß wurden die oben näher bezeichneten Thiophenazofarbstoffe der Formel I gefunden.

Alle in der obengenannten Formel I auftretenden Alkylgruppen können sowohl geradkettig als auch verzweigt sein.

Wenn in der obengenannten Formel I substituierte Phenylgruppen auftreten, so können als Substituenten beispielsweise $C_1$-$C_4$-Alkyl, $C_1$-$C_4$-Alkoxy, Halogen, dabei insbesondere Chlor oder Brom, $C_1$-$C_4$-Alkanoylamino, Sulfamoyl oder $C_1$-$C_4$-Mono- oder Dialkylsulfamoyl, wobei die Alkylkette gegebenenfalls durch ein Sauerstoffatom unterbrochen ist, in Betracht kommen.

Geeignete Rest $R^1$, $R^2$ und $R^3$ sind beispielsweise Methoxycarbonyl, Ethoxycarbonyl, Propoxycarbonyl, Isopropoxycarbonyl, Butoxycarbonyl oder sec-Butoxycarbonyl.

Reste $R^1$ sind weiterhin z.B. $CH = C(CN)_2$, $CH = C(CN)COOCH_3$, $CH = C(CN)COOC_2H_5$, $CH = C(COOCH_3)_2$ oder $CH = C(COOC_2H_5)_2$.

Reste $R^2$ sind weiterhin, ebenso wie die Reste $R^4$ und $R^5$, z.B. Methyl, Ethyl, Propyl, Isopropyl, Butyl, Isobutyl oder sec-Butyl.

Reste $R^2$ sind weiterhin, ebenso wie der Rest $R^5$, beispielsweise Methoxy, Ethoxy, Propoxy, Isopropoxy, Butoxy, Isobutoxy oder sec-Butoxy.

Reste $R^2$ sind weiterhin z.B. Chlor oder Brom.

Reste $R^4$ sind weiterhin beispielsweise Pentyl, Isopentyl, Neopentyl, tert-Pentyl, Hexyl, Isohexyl, Heptyl, Octyl, 2-Ethylhexyl, Phenoxymethyl, 2-Phenoxyethyl, 2-, 3- oder 4-Methylphenyl, 2-, 3- oder 4-Methoxyphenyl, 2-, 3- oder 4-Chlorphenyl, 2,4-Dichlorphenyl, 2-, 3- oder 4-Bromphenyl, 2-, 3- oder 4-Formylaminophenyl, 2-, 3- oder 4-Acetylaminophenyl, 3- oder 4-Sulfamoylphenyl, 3- oder 4-Mono- oder Dimethylsulfamoylphenyl oder 3- oder 4-[Bis(2-methoxyethyl)sulfamoyl]phenyl.

Reste $R^5$ sind weiterhin, wie auch die Reste $R^6$, z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Doxaoctyl, 3,7-Dioxanonyl, 4,7-Dioxaoctyl oder 4,7-Dioxanonyl.

Reste $R^6$ sind weiterhin z.B. 2- oder 4-Butoxybutyl, 4,8-Dioxadecyl, 3,6,9-Trioxadecyl, 3,6,9-Trioxaundecyl, 3,6,9,12-Tetraoxatridecyl, 3,6,9,12-Tetraoxatetradecyl, 3-Benzyloxypropyl, 6-Phenoxy-4-oxahexyl, 2-Cyanoethyl oder 2-Phenylethyl.

Bevorzugt sind Thiophenazofarbstoffe der Formel I, in der nur einer der Reste $R^1$, $R^2$ und $R^3$ $C_1$-$C_4$-Alkoxycarbonyl bedeutet.

Besonders bevorzugt sind Thiophenazofarbstoffe der Formel I, in der

- $R^1$ Cyano, $C_1$-$C_4$-Alkoxycarbonyl oder Formyl,
- $R^2$ $C_1$-$C_4$-Alkyl oder Chlor,
- $R^3$ Cyano,
- $R^4$ Phenyl, Thien-2-yl oder Thien-3-yl,
- $R^5$ $C_1$-$C_4$-Alkyl und
- $R^6$ $C_3$-$C_9$-Alkyl, dessen Alkylkette durch 1 bis 3 Sauerstoffatome unterbrochen und gegebenenfalls durch Phenoxy substituiert ist,

bedeuten.

Insbesondere sind Thiophenazofarbstoffe der Formel I hervorzuheben, in der $R^6$ $C_2H_4OCH_3$, $C_3H_6OCH_3$, $C_3H_6OC_2H_5$, $C_3H_6OC_2H_4OC_2H_5$, $C_3H_6OCH(CH_3)CH_2OCH_3$, $CH_2(C_2H_4O)_2CH_3$, $CH_2(C_2H_4O)_3CH_3$, $C_3H_6O(C_2H_4O)_2C_2H_5$ oder $C_3H_6OC_2H_4OC_6H_5$ bedeuten.

Die Herstellung der erfindungsgemäßen Thiophenazofarbstoffe erfolgt nach an sich bekannter Weise. Beispielsweise kann man ein 2-Aminothiophen der Formel II

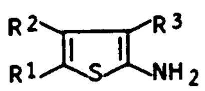

(II),

in der $R^1$, $R^2$ und $R^3$ jeweils die obengenannte Bedeutung besitzen, diazotieren und mit einem Thiazol der Formel III

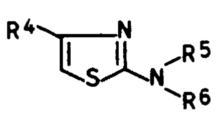

(III),

in der $R^4$, $R^5$ und $R^6$ jeweils die obengenannte Bedeutung besitzen, kuppeln.

2-Aminothiophene der Formel II sind bereits bekannt und z.B. in der EP-A 150 034 beschrieben oder können analog zu der dort genannten Herstellungsweise erhalten werden.

Bei den Thioazolen der Formel III handelt es sich im allgemeinen ebenfalls um bekannte Verbindungen. Sie sind z.B. in der US-A-3 770 719 oder in J.V. Metzger "Heterocyclic Compounds - Thiazole and its Derivatives", Vol. 34, Part 1, Interscience Publ., John Wiley, New York, 1979, beschrieben oder können analog zu den dort genannten Methoden erhalten werden.

Weitere Einzelheiten der Herstellung der erfindungsgemäßen Farbstoffe können den Beispielen entnommen werden.

Im allgemeinen liegen solche Thiophenazofarbstoffe der Formel I, die in den Resten $R^5$ und $R^6$ zusammen 4 oder mehr Sauerstoffatome aufweisen, bei Raumtemperatur in flüssigem Aggregatzustand vor.

Die neuen Thiophenazofarbstoffe der Formel I eignen sich in vorteilhafter Weise als Dispersionsfarbstoffe zum Färben von textilen Fasern, insbesondere von Celluloseestern oder Polyestern, aber auch von Polyamiden oder Mischgeweben aus Polyestern und Cellulosefasern.

Man erhält Färbungen mit guten Echtheiten, insbesondere mit guter Lichtechtheit und guter Thermomigrierechtheit. Die neuen Farbstoffe weisen eine gute Migration auf.

Um einen günstigen Farbaufbau zu erreichen, kann es in manchen Fällen von Vorteil sein, Mischungen der erfindungsgemäßen Farbstoffe der Formel I zum Färben zu verwenden.

Die folgenden Beispiele sollen die Erfindung näher erläutern.

Beispiel 1

18,7 g 2-Amino-3-cyano-4-chlor-5-formylthiophen wurden in ein auf 0 ° C abgekühltes Gemisch aus 111 g 80 gew.%iger Schwefelsäure, 15 ml Eisessig und 32 g 42 Gew.%iger Nitrosylschwefelsäure eingetragen. Dann rührte man 4 Stunden bei 0 bis 5 ° C nach. Anschließend gab man die Diazoniumsalzlösung in ein Gemisch, das eine Temperatur von 0 ° C aufwies und aus 36,4 g der Kupplungskomponente der Formel

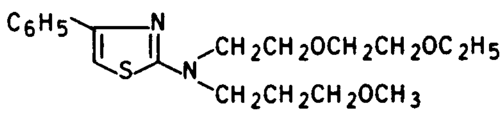
,

200 g Eisessig, 40 g Propionsäure und 30 ml einer 10 gew.%igen Amidosulfonsäurelösung hergestellt wurde. Nach der Vereinigung beider Lösungen gab man ca. 160 g Eis hinzu und pufferte das Gemisch dann mit Natriumacetatlösung (ca. 30 gew.%ig) auf pH 0,2 bis 0,7 ab. Danach fällte man den entstendenen Farbstoff durch Zugabe von Wasser vollständig aus, saugte ab, wusch neutral und trocknete. Man erhielt 52 g eines dunkelblauen Pulvers der Formel

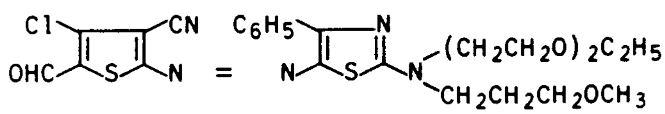

Der Farbstoff löst sich in Aceton mit blauer Farbe und färbt Polyethylenterephthalategewebe in klaren, mittelblauen Tönen mit sehr gutem Aufbauvermögen egal an. Die Färbungen haben hohe Licht- und Thermofixierechtheiten. $\lambda_{max}$: 604 nm (N,N-Dimethylformamid/Eisessig 9:1 v/v).

Beispiel 2

Ein Gemisch aus 110 g 80 gew.%iger Schwefelsäure, 15 g Eisessig und 32 g 42 gew.%iger Nitrosylschwefelsäure wurde auf 0 ° C abgekühlt. Dann streute man unter gutem Rühren unter Kühlen 21 g 2-Amino-3-cyano-4-methylthiophen-5-carbonsäureethylester so ein, daß die Reaktionstemperatur bei 0 bis 5 ° C gehalten wurde. Nach 3- bis 4-stündigem Rühren erhielt man eine klare Diazoniumsalzlösung. Man gab sie in eine Lösung, die aus 36,4 g der Kupplungskomponente der Formel

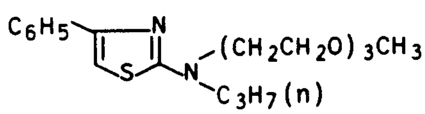

in 15 ml konz. Salzsäure, 350 ml Wasser und 0,5 g eines sauer wirksamen Dispergiermittels hergestellt wurde. Vor Zugabe der Diazoniumsalzlösung kühlte man mit 300 g Eis auf ≦ 0 ° C ab und setzte noch 1 g Amidosulfonsäure hinzu. Gleichzeitig mit dem Zulauf der Diazoniumsalzlösung wurden Wasser und Eis so zugesetzt, daß das Kupplungsgemisch rührbar blieb und die Temepratur 5 ° C nicht überschritt. Man rührte das Gemisch 15 Minuten nach, hob den pH-Wert der Suspension dann durch Zugabe von eiskalter, verdünnter Natronlauge auf 0,5 bis 0,8 an und isolierte das angefallen Produkt analog Beispiel 1. Man erhielt 57,5 g eines violetten Pulvers der Formel

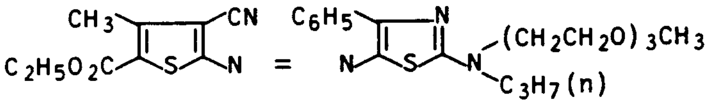 ,

das sich in Aceton mit rotstichig blauer Farbe löst und Polyestergewebe in lichtechten, kräftigen rotstichig blauen bis marineblauen Tönen färbt. $\lambda_{max}$: 576 nm (N,N-Dimethylformamid/Eisessig 9:1 v/v).

Die in den folgenden Tabellen aufgeführten Farbstoffe werden in analoger Weise erhalten.

Tabelle 1

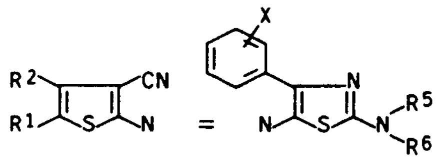

| Bsp. Nr. | $R^1$ | $R^2$ | X | $R^5$ | $R^6$ | Farbton |
|---|---|---|---|---|---|---|
| 3 | CN | $CH_3$ | H | $CH_3$ | $C_3H_6OC_2H_4OCH_3$ | rotst. blau |
| 4 | CN | $CH_3$ | H | $C_2H_5$ | $C_3H_6OC_2H_4OCH_3$ | rotst. blau |
| 5 | CN | $CH_3$ | p-$OCH_3$ | $C_2H_5$ | $C_3H_6OC_2H_4OCH_3$ | marineblau |
| 6 | CN | $CH_3$ | H | $C_2H_5$ | $(C_2H_4O)_2CH_3$ | rotst. blau |
| 7 | CN | $CH_3$ | H | $C_2H_5$ | $(C_2H_4O)_3CH_3$ | rotst. blau |
| 8 | CN | $CH_3$ | H | $C_2H_5$ | $(C_2H_4O)_2C_2H_5$ | marineblau |
| 9 | CN | $CH_3$ | H | $C_2H_5$ | $(C_2H_4O)_3C_2H_5$ | marineblau |
| 10 | CN | $CH_3$ | m-Cl | $C_2H_5$ | $(C_2H_4O)_2CH_3$ | rotst. blau |
| 11 | CN | $CH_3$ | p-Cl | $C_2H_5$ | $(C_2H_4O)_2CH_3$ | rotst. blau |
| 12 | CN | $CH_3$ | m-$SO_2N(CH_3)_2$ | $C_2H_5$ | $(C_2H_4O)_2CH_3$ | rotst. blau |
| 13 | CN | $CH_3$ | m-$SO_2N(CH_3)_2$ | $C_2H_5$ | $(C_2H_4O)_3CH_3$ | rotst. blau |
| 14 | CN | $CH_3$ | p-$OCH_3$ | $C_2H_5$ | $(C_2H_4O)_2C_2H_5$ | rotst. blau |
| 15 | $CO_2CH_3$ | $CH_3$ | H | $C_2H_5$ | $(C_2H_4O)_2C_2H_5$ | blauviolett |
| 16 | $CO_2C_2H_5$ | $CH_3$ | H | $C_2H_5$ | $(C_2H_4O)_2CH_3$ | blauviolett |
| 17 | CN | Cl | H | $C_2H_5$ | $(C_2H_4O)_2CH_3$ | marineblau |
| 18 | CN | Cl | H | $C_2H_5$ | $(C_2H_4O)_2C_2H_5$ | marineblau |
| 19 | CN | Cl | H | $C_3H_6OCH_3$ | $(C_2H_4O)_2C_2H_5$ | marineblau |
| 20 | CN | H | H | $C_3H_6OCH_3$ | $(C_2H_4O)_2C_2H_5$ | rotst. blau |
| 21 | CHO | H | H | $C_3H_6OCH_3$ | $(C_2H_4O)_2C_2H_5$ | blau |
| 22 | CHO | H | H | $C_2H_5$ | $(C_2H_4O)_2C_2H_5$ | blau |
| 23 | CN | $C_2H_5$ | H | $C_2H_5$ | $(C_2H_4O)_2CH_3$ | rotst. blau |
| 24 | CHO | Cl | H | $C_2H_5$ | $(C_2H_4O)_2CH_3$ | blau |
| 25 | CHO | Cl | H | $C_2H_5$ | $(C_2H_4O)_2C_2H_5$ | blau |
| 26 | CHO | Cl | H | $C_2H_5$ | $(C_2H_4O)_3CH_3$ | blau |
| 27 | CHO | Cl | H | $C_2H_5$ | $(C_2H_4O)_3C_2H_5$ | blau |
| 28 | CHO | Cl | H | $C_3H_7(n)$ | $(C_2H_4O)_2CH_3$ | blau |
| 29 | CHO | Cl | H | $C_2H_5$ | $C_3H_6OC_2H_4OCH_3$ | blau |
| 30 | CHO | Cl | H | $C_2H_5$ | $C_3H_6OC_2H_4OC_2H_5$ | blau |
| 31 | CHO | Cl | H | $CH_3$ | $C_3H_6OC_2H_4OC_2H_5$ | blau |
| 32 | CHO | Cl | H | $CH_3$ | $C_3H_6OC_2H_4OCH_3$ | blau |

Tabelle 1 - Forts.

| Bsp. Nr. | $R^1$ | $R^2$ | X | $R^5$ | $R^6$ | Farbton |
|---|---|---|---|---|---|---|
| 33 | CHO | Cl | H | $CH_3$ | $(C_2H_4O)_3C_2H_5$ | blau |
| 34 | CHO | Cl | H | $C_3H_7(n)$ | $(C_2H_4O)_3CH_3$ | blau |
| 35 | CHO | Cl | H | $C_2H_4OC_4H_9(n)$ | $(C_2H_4O)_3C_2H_5$ | blau |
| 36 | CHO | Cl | H | $C_2H_4OCH_3$ | $(C_2H_4O)_2C_2H_5$ | blau |
| 37 | CHO | Cl | H | $C_3H_6OC_3H_7$ | $(C_2H_4O)_3C_2H_5$ | blau |
| 38 | CHO | Cl | H | $C_2H_4OC_2H_5$ | $(C_2H_4O)_2C_2H_5$ | blau |
| 39 | CHO | Cl | H | $C_3H_6OC_2H_5$ | $(C_2H_4O)_3C_2H_5$ | blau |
| 40 | CHO | Cl | H | $C_3H_6OC_2H_5$ | $(C_2H_4O)_3CH_3$ | blau |
| 41 | CHO | Cl | H | $CH(CH_3)_2$ | $(C_2H_4O)_2CH_3$ | blau |
| 42 | CHO | Cl | m-$SO_2N(CH_3)_2$ | $C_2H_5$ | $(C_2H_4O)_2CH_3$ | blau |
| 43 | CHO | Cl | m-$SO_2N(C_2H_4OCH_3)_2$ | $C_2H_5$ | $(C_2H_4O)_2CH_3$ | blau |
| 44 | CHO | Cl | m-Cl | $C_2H_5$ | $(C_2H_4O)_2CH_3$ | blau |
| 45 | CHO | Cl | p-Cl | $C_2H_5$ | $(C_2H_4O)_2CH_3$ | blau |
| 46 | CHO | Cl | p-Cl | $C_2H_5$ | $(C_2H_4O)_3CH_3$ | blau |
| 47 | 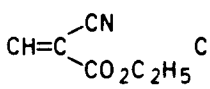 | Cl | H | $C_2H_5$ | $(C_2H_4O)_2CH_3$ | grünblau |
| 48 | 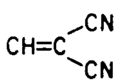 | Cl | H | $C_2H_5$ | $(C_2H_4O)_3C_2H_5$ | grünblau |

Tabelle 2

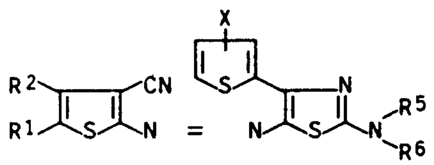

| Bsp. Nr. | $R^1$ | $R^2$ | X | $R^5$ | $R^6$ | Farbton |
|---|---|---|---|---|---|---|
| 49 | CN | $CH_3$ | H | $CH_3$ | $C_3H_6OC_2H_4OCH_3$ | blau |
| 50 | CN | $CH_3$ | H | $C_2H_5$ | $C_3H_6OC_2H_4OCH_3$ | blau |
| 51 | CN | $CH_3$ | H | $C_2H_5$ | $C_3H_6OC_2H_4OCH_3$ | blau |
| 52 | CN | $CH_3$ | H | $C_2H_5$ | $(C_2H_4O)_2CH_3$ | blau |
| 53 | CN | $CH_3$ | H | $C_2H_5$ | $(C_2H_4O)_3CH_3$ | blau |
| 54 | CN | $CH_3$ | H | $C_2H_5$ | $(C_2H_4O)_2C_2H_5$ | blau |
| 55 | CN | $CH_3$ | H | $C_2H_5$ | $(C_2H_4O)_3C_2H_5$ | blau |
| 56 | CN | $CH_3$ | H | $C_2H_5$ | $(C_2H_4O)_2CH_3$ | blau |
| 57 | CN | $CH_3$ | H | $C_3H_7$ | $(C_2H_4O)_2CH_3$ | blau |
| 58 | CN | $CH_3$ | H | $C_2H_5$ | $(C_2H_4O)_3CH_3$ | blau |
| 59 | CN | $CH_3$ | H | $C_3H_7$ | $(C_2H_4O)_3CH_3$ | blau |
| 60 | CN | $CH_3$ | H | $C_2H_5$ | $(C_2H_4O)_2C_2H_5$ | blau |
| 61 | $CO_2CH_3$ | $CH_3$ | H | $C_2H_5$ | $(C_2H_4O)_2C_2H_5$ | blau |
| 62 | $CO_2C_2H_5$ | $CH_3$ | H | $C_2H_5$ | $(C_2H_4O)_2CH_3$ | blau |
| 63 | CN | $CH_3$ | H | $C_2H_5$ | $(C_2H_4O)_3C_2H_5$ | blau |
| 64 | CHO | Cl | H | $C_3H_6OC_2H_5$ | $(C_2H_4O)_3C_2H_5$ | blaugrün |
| 65 | CN | Cl | H | $C_2H_5$ | $(C_2H_4O)_2C_2H_5$ | blau |
| 66 | CN | Cl | H | $C_3H_6OCH_3$ | $(C_2H_4O)_2C_2H_5$ | blau |
| 67 | CN | $C_6H_5$ | H | $C_3H_6OCH_3$ | $(C_2H_4O)_2C_2H_5$ | blau |
| 68 | CHO | H | H | $C_3H_6OCH_3$ | $(C_2H_4O)_3CH_3$ | grünst.blau |
| 69 | CHO | H | H | $C_2H_5$ | $(C_2H_4O)_3CH_3$ | grünst.blau |
| 70 | CN | $C_2H_5$ | H | $C_2H_5$ | $(C_2H_4O)_2CH_3$ | blau |
| 71 | CHO | Cl | H | $C_2H_5$ | $(C_2H_4O)_2CH_3$ | türkis |
| 72 | CHO | Cl | H | $C_2H_5$ | $(C_2H_4O)_2C_2H_5$ | blaugrün |
| 73 | CHO | Cl | H | $C_2H_5$ | $(C_2H_4O)_3CH_3$ | blaugrün |
| 74 | CHO | Cl | H | $C_2H_5$ | $(C_2H_4O)_3C_2H_5$ | blaugrün |
| 75 | CHO | Cl | H | $C_3H_7(n)$ | $(C_2H_4O)_2CH_3$ | blaugrün |
| 76 | CHO | Cl | H | $C_2H_5$ | $C_3H_6OC_2H_4OCH_3$ | blaugrün |
| 77 | CHO | Cl | H | $C_2H_5$ | $C_3H_6OC_2H_4OC_2H_5$ | blaugrün |

Tabelle 2 - Forts.

| Bsp. Nr. | $R^1$ | $R^2$ | X | $R^5$ | $R^6$ | Farbton |
|---|---|---|---|---|---|---|
| 78 | CHO | Cl | H | $CH_3$ | $C_3H_6OC_2H_4OC_2H_5$ | blaugrün |
| 79 | CHO | Cl | 2-$CH_3$ | $CH_3$ | $C_3H_6OC_2H_4OCH_3$ | blaugrün |
| 80 | CHO | Cl | H | $C_2H_5$ | $(C_2H_4O)_3C_2H_5$ | blaugrün |
| 81 | CHO | Cl | H | $C_3H_7$(n) | $(C_2H_4O)_3CH_3$ | blaugrün |
| 82 | CHO | Cl | H | $C_2H_4OC_4H_9$(n) | $(C_2H_4O)_3C_2H_5$ | blaugrün |
| 83 | CHO | Cl | H | $C_2H_4OCH_3$ | $(C_2H_4O)_2C_2H_5$ | blaugrün |
| 84 | CHO | Cl | H | $C_2H_4OC_3H_7$(n) | $(C_2H_4O)_3C_2H_5$ | blaugrün |
| 85 | CHO | Cl | H | $C_2H_4OC_2H_5$ | $(C_2H_4O)_2C_2H_5$ | blaugrün |
| 86 | CHO | Cl | H | $C_3H_6OC_2H_5$ | $(C_2H_4O)_3CH_3$ | blaugrün |
| 87 | CHO | Cl | H | $C_2H_4OC_2H_5$ | $(C_2H_4O)_3CH_3$ | blaugrün |
| 88 | CHO | Cl | H | $CH(CH_3)_2$ | $(C_2H_4O)_2CH_3$ | blaugrün |
| 89 | CHO | Cl | H | $C_2H_5$ | $(C_2H_4O)_2CH_3$ | blaugrün |
| 90 | CHO | Cl | H | $C_3H_6OC_3H_7$(n) | $(C_2H_4O)_3C_2H_5$ | türkis |
| 91 | CHO | Cl | H | $C_3H_7$ | $(C_2H_4O)_2CH_3$ | türkis |
| 92 | CHO | $OC_2H_5$ | H | $C_2H_5$ | $(C_2H_4O)_2CH_3$ | türkis |
| 93 | CHO | $OC_2H_5$ | H | $C_3H_7$(n) | $(C_2H_4O)_2CH_3$ | türkis |
| 94 | CHO | H | H | $C_3H_7$ | $(C_2H_4O)_3CH_3$ | blaugrün |
| 95 | $CO_2CH_3$ | $CH_3$ | H | $C_2H_5$ | $(C_2H_4O)_3CH_3$ | blau |
| 96 | $CO_2CH_3$ | $C_2H_5$ | H | $C_2H_5$ | $(C_2H_4O)_3CH_3$ | blau |

Tabelle 3

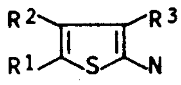 = 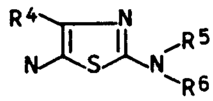

| Bsp. Nr. | $R^1$ | $R^2$ | $R^3$ | $R^4$ | $R^5$ | $R^6$ | Farbton |
|---|---|---|---|---|---|---|---|
| 97 | $CH_3O_2C$ | $CH_3$ | CN | 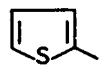 | $C_4H_8OCH_3$ | $(C_2H_4O)_3C_2H_5$ | blau |
| 98 | 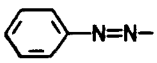 | H | CN | $C_6H_5$ | $C_3H_6OCH_3$ | $(C_2H_4O)_3CH_3$ | blau |
| 99 | $C_2H_5O_2C$ | $C_2H_5O_2C$ | CN | $C_6H_5$ | $C_3H_7(n)$ | $C_3H_6OC_2H_5$ | rotst.blau |
| 100 | $C_2H_5O_2C$ | $C_2H_5$ | CN | 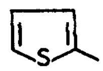 | $C_3H_7(n)$ | $C_3H_6OC_2H_5$ | blau |
| 101 | CN | $CH_3$ | CN | $C_6H_5$ | $C_3H_7(n)$ | $(C_2H_4O)_2CH_3$ | rotst.blau |
| 102 | CN | $CH_3$ | CN | $C_6H_5$ | $C_3H_7(i)$ | $(C_2H_4O)_2CH_3$ | rotst.blau |
| 103 | CN | $CH_3$ | CN | $C_6H_5$ | $C_4H_9(n)$ | $(C_2H_4O)_2CH_3$ | rotst.blau |
| 104 | CN | $CH_3$ | CN | 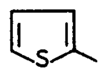 | $C_3H_7(n)$ | $(C_2H_4O)_2CH_3$ | blau |
| 105 | CN | $CH_3$ | CN | 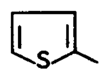 | $C_3H_7(n)$ | $C_3H_6OCH_2CH_2$<br>$OCH_3$ | blau |
| 106 | $C_2H_5O_2C$ | $C_2H_5O_2C$ | CN | $C_6H_5$ | $C_2H_4OC_3H_7(n)$ | $C_3H_6OC_2H_4OC_2H_5$ | rotst. blau |
| 107 | $C_2H_5O_2C$ | $CH_3$ | $CO_2C_2H_5$ | $C_6H_5$ | $C_2H_4OC_4H_9(n)$ | $C_3H_6OC_3H_4OC_2H_5$ | violett |
| 108 | $C_2H_5O_2C$ | $CH_3$ | $CO_2C_2H_5$ | $C_6H_5$ | $C_3H_7(n)$ | $C_3H_6OC_2H_5$ | violett |
| 109 | CHO | $CH_3$ | CN | $C_6H_5$ | $C_2H_5$ | $C_2H_4OC_2H_4OCH_3$ | blau |
| 110 | CHO | $CH_3$ | CN | $C_6H_5$ | $C_2H_5$ | $(C_2H_4O)_3C_2H_5$ | blau |
| 111 | CHO | $CH_3$ | CN | $C_6H_5$ | $C_3H_6OCH_3$ | $(C_2H_4O)_2C_2H_5$ | blau |

Tabelle 4

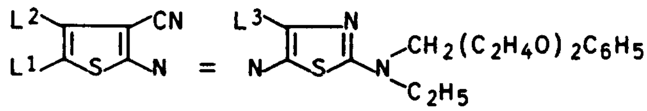

| Bsp. Nr. | $L^1$ | $L^2$ | $L^3$ | $\lambda_{max}$ [nm] |
|---|---|---|---|---|
| 112 | $CO_2CH_3$ | $CH_3$ | 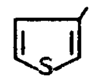 | 580 |
| 113 | $CO_2CH_3$ | $CH_3$ | 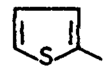 | 594 |
| 114 | CHO | Cl | 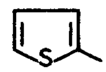 | 638 |
| 115 | CHO | Cl | 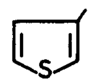 | 592 |
| 116 | CHO | Cl | $C_6H_5$ | 606 |
| 117 | CN | $CH_3$ | 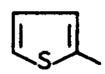 | 609 |

## Patentansprüche

**1.** Thiophenazofarbstoffe der Formel I

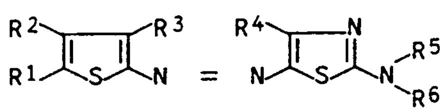 (I),

in der

$R^1$ Cyano, $C_1$-$C_4$-Alkoxycarbonyl, Phenylazo, Phenylsulfonyl, Formyl oder den Rest

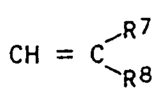 ,

wobei $R^7$ und $R^8$ gleich oder verschieden sind und unabhängig voneinander jeweils für Cyano oder $C_1$-$C_4$-Alkoxycarbonyl stehen,

$R^2$ $C_1$-$C_4$-Alkyl, Phenyl, Halogen, $C_1$-$C_4$-Alkoxy oder $C_1$-$C_4$-Alkoxycarbonyl, oder $R^1$ und $R^2$ zusammen den Rest $(CH_2)_3$-CO, der gegebenenfalls durch 1 oder 2 Methylgruppen substituiert und dessen Carbonylgruppe orthoständig zum Schwefelatom an den Thiophenring geknüpft ist,

$R^3$ Cyano oder $C_1$-$C_4$-Alkoxycarbonyl,

$R^4$ $C_1$-$C_8$-Alkyl, Cyclohexyl, Phenoxy-$C_1$-$C_4$-alkyl, gegebenenfalls substituiertes Phenyl, Thienyl, $C_1$-$C_4$-Alkylthienyl oder Halogenthienyl,

$R^5$ $C_1$-$C_4$-Alkyl, $C_3$-$C_7$-Alkyl, dessen Alkylkette durch 1 oder 2 Sauerstoffatome unterbrochen ist, oder $C_1$-$C_4$-Alkoxy und

$R^6$ Phenylethyl oder $C_3$-$C_{12}$-Alkyl, dessen Alkylkette durch 1 bis 4 Sauerstoffatome unterbrochen

und gegebenenfalls durch Phenyl oder Phenoxy substituiert ist,

bedeuten, mit der Maßgabe, daß wenn $R^5$ und $R^6$ gleichzeitig für durch Sauerstoffatome unterbrochenes Alkyl stehen, der Rest $R^6$ mindestens 2 Kohlenstoffatome mehr aufweist als der Rest $R^5$ und wobei mindestens einer der Reste $R^5$ und $R^6$ für eine durch Sauerstoff unterbrochene Alkylkette steht.

**2.** Thiophenazofarbstoffe gemäß Anspruch 1, dadurch gekennzeichnet, daß nur einer der Reste $R^1$, $R^2$ und $R^3$ $C_1$-$C_4$-Alkoxycarbonyl bedeutet.

**3.** Thiophenazofarbstoffe gemäß Anspruch 1, dadurch gekennzeichnet, daß
$R^1$ Cyano, $C_1$-$C_4$-Alkoxycarbonyl oder Formyl,
$R^2$ $C_1$-$C_4$-Alkyl oder Chlor,
$R^3$ Cyano,
$R^4$ Phenyl, Thien-2-yl oder Thien-3-yl,
$R^5$ $C_1$-$C_4$-Alkyl und
$R^6$ $C_3$-$C_9$-Alkyl, dessen Alkylkette durch 1 bis 3 Sauerstoffatome unterbrochen und gegebenenfalls durch Phenoxy substituiert ist,
bedeuten.

**4.** Verwendung der Thiophenazofarbstoffe gemäß Anspruch 1 zum Färben von textilen Fasern.

## Claims

**1.** A thiopheneazo dye of the formula I

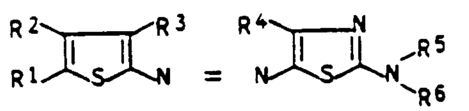

(I),

where
$R^1$ is cyano, $C_1$-$C_4$-alkoxycarbonyl, phenylazo, phenylsulfonyl, formyl or the radical

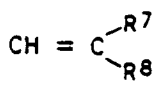

,

where $R^7$ and $R^8$ are identical or different and each is independently of the other cyano or $C_1$-$C_4$-alkoxycarbonyl,
$R^2$ is $C_1$-$C_4$-alkyl, phenyl, halogen, $C_1$-$C_4$-alkoxy or $C_1$-$C_4$-alkoxycarbonyl, or $R^1$ and $R^2$ together are the radical $(CH_2)_3$-CO, which may be substituted by 1 or 2 methyl groups and whose carbonyl group is bonded to the thiophene ring in the ortho position relative to the sulfur atom,
$R^3$ is cyano or $C_1$-$C_4$-alkoxycarbonyl,
$R^4$ is $C_1$-$C_8$-alkyl, cyclohexyl, phenoxy-$C_1$-$C_4$-alkyl, substituted or unsubstituted phenyl, thienyl, $C_1$-$C_4$-alkylthienyl or halothienyl,
$R^5$ is $C_1$-$C_4$-alkyl, $C_3$-$C_7$-alkyl whose alkyl chain is interrupted by 1 or 2 oxygen atoms, or $C_1$-$C_4$-alkoxy and
$R^6$ is phenylethyl or $C_3$-$C_{12}$-alkyl whose alkyl chain is interrupted by from 1 to 4 oxygen atoms and which may be substituted by phenyl or phenoxy,
with the proviso that, when $R^5$ and $R^6$ are each oxygen-interrupted alkyl, $R^6$ has 2 or more carbon atoms more than $R^5$, and at least one of $R^5$ and $R^6$ is an oxygen-interrupted alkyl chain.

**2.** A thiopheneazo dye as claimed in claim 1, wherein only one of $R^1$, $R^2$ and $R^3$ is $C_1$-$C_4$-alkoxycarbonyl.

**3.** A thiopheneazo dye as claimed in claim 1, wherein
$R^1$ is cyano, $C_1$-$C_4$-alkoxycarbonyl or formyl,
$R^2$ is $C_1$-$C_4$-alkyl or chlorine,

$R^3$ is cyano,
$R^4$ is phenyl, 2-thienyl or 3-thienyl,
$R^5$ is $C_1$-$C_4$-alkyl and
$R^6$ is $C_3$-$C_9$-alkyl whose alkyl chain is interrupted by from 1 to 3 oxygen atoms and which may be substituted by phenoxy.

**4.** The use of a thiopheneazo dye as claimed in claim 1 for dyeing textile fibers.

**Revendications**

**1.** Colorants thiophène-azoïques de formule I

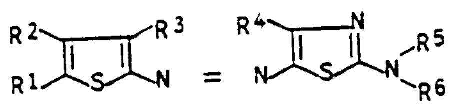

(I),

dans laquelle
$R^1$ représente un groupement cyano, (alcoxy en $C_1$-$C_4$)carbonyle, phénylazo, phénylsulfonyle, formyle ou le reste

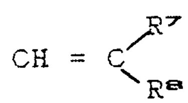

où $R^7$ et $R^8$ sont identiques ou différents et représentent indépendamment l'un de l'autre un groupement cyano ou un groupement (alcoxy en $C_1$-$C_4$)carbonyle,
$R^2$ représente un groupement alkyle en $C_1$-$C_4$, phényle, un atome d'halogène ou un groupement alcoxy en $C_1$-$C_4$ ou (alcoxy en $C_1$-$C_4$)carbonyle, au bien $R^1$ et $R^2$ représentent ensemble le reste $(CH_2)_3$-CO qui est éventuellement substitué par 1 ou 2 groupements méthyle et dont le groupement carbonyle est lié en ortho de l'atome de soufre sur le noyau thiophène,
$R^3$ est un groupement cyano ou (alcoxy en $C_1$-$C_4$)carbonyle,
$R^4$ est un groupement alkyle en $C_1$-$C_8$, cyclohexyle, phénoxy(alkyle en $C_1$-$C_4$), phényle éventuellement substitué, thiényle, (alkyl en $C_1$-$C_4$)thiényle ou halogénothiényle,
$R^5$ représente un groupement alkyle en $C_1$-$C_4$, alkyle en $C_3$-$C_7$ dont la chaîne alkyle est interrompue par 1 ou 2 atomes d'oxygène, ou alcoxy en $C_1$-$C_4$ et
$R^6$ représente un groupement phényléthyle ou alkyle en $C_3$-$C_{12}$ dont la chaîne alkyle est interrompue par 1 à 4 atomes d'oxygène et éventuellement substituée par un groupement méthyle ou phénoxy,

pourvu que, quand $R^5$ et $R^6$ représentent en même temps une chaîne alkyle interrompue par des atomes d'oxygène, le reste $R^6$ présente au moins deux atomes de carbone de plus que le reste $R^5$, et qu'au moins l'un des restes $R^5$ et $R^6$ représente une chaîne alkyle interrompue par de l'oxygène.

**2.** Colorants thiophène-azoïques selon la revendication 1, caractérisés en ce que seulement l'un des restes $R^1$, $R^2$ et $R^3$ représente un groupement (alcoxy en $C_1$-$C_4$)carbonyle.

**3.** Colorants thiophène-azoïques selon la revendication 1, caractérisés en ce que
$R^1$ représente un groupement cyano, (alcoxy, en $C_1$-$C_4$)carbonyle ou formyle,
$R^2$ représente un groupement alkyle en $C_1$-$C_4$ ou un atome de chlore,
$R^3$ représente un groupement cyano,
$R^4$ représente un groupement phényle, thièn-2-yle ou thièn-3-yle,
$R^5$ représente un groupement alkyle en $C_1$-$C_4$ et
$R^6$ représente un groupement alkyle en $C_3$-$C_9$ dont la chaîne alkyle est interrompue par 1 à 3 atomes d'oxygène et est éventuellement substituée par un groupement phénoxy.

**4.** Utilisation des colorants thiophène-azoïques selon la revendication 1 pour la teinture de fibres textiles.